# EUROPÄISCHE PATENTSCHRIFT

(11) **EP 0 917 675 B1**
(45) Veröffentlichungstag und Bekanntmachung des Hinweises auf die Patenterteilung: **20.09.2000**
(21) Anmeldenummer: 97937413.9
(22) Anmeldetag: 29.07.1997
(51) Int. Cl.: G05D 3/12, F15B 15/28

(54) **STELLUNGSREGLER FÜR ANTRIEBE SOWIE PNEUMATISCHES REGELVENTIL MIT EINEM DERARTIGEN STELLUNGSREGLER**
POSITION REGULATOR FOR DRIVE SYSTEMS AND PNEUMATIC CONTROL VALVE HAVING A POSITION REGULATOR OF THIS TYPE
POSITIONNEUR POUR DISPOSITIFS D'ENTRAINEMENT ET SOUPAPE DE REGULATION PNEUMATIQUE EQUIPEE DUDIT POSITIONNEUR

(30) Priorität: 07.08.1996 DE 29613685 U
(43) Veröffentlichungstag der Anmeldung: 26.05.1999
(73) Patentinhaber: SIEMENS AKTIENGESELLSCHAFT, 80333 München (DE)
(72) Erfinder: HEER, Klaus-Peter, D-76863 Herxheim (DE)
(86) Internationale Anmeldenummer: DE9701602
(87) Internationale Veröffentlichungsnummer: WO9806017

(56) Entgegenhaltungen:
- US-A- 4 456 860
- US-A- 4 743 823
- KLAUS-PETER HEER: "Elektropneumatische Stellungsregler für optimale Reglerergebnisse" CAV, SIEMENS AG, KARLSRUHE, DE, BESTELL-NR E80001-V0343-A020, Bd. 26, April 1993, Seiten 1-4, XP002049402 in der Anmeldung erwähnt

## Beschreibung

Die Erfindung betrifft einen Stellungsregler für Antriebe nach dem Oberbegriff des Anspruchs 1 sowie ein pneumatisches Regelventil mit einem derartigen Stellungsregler.

Aus der Informationsschrift "Elektropneumatische Stellungsregler für optimale Reglerergebnisse" der Siemens AG, Bestellnummer E80001-V0343-A020, ist der elektropneumatische Stellungsregler SIPART PS bekannt, der eingesetzt wird, um an pneumatischen Schub- oder Schwenkantrieben die Position eines angeschlossenen Stellgliedes, beispielsweise eine Ventil- oder Klappenstellung, zu regeln. Von einem Prozeßregler- oder -leitsystem wird dem Stellungsregler über eine analoge 4- bis 20 mA-Schnittstelle ein Sollwert vorgegeben, und der Stellungsregler erzwingt am Antrieb dann eine diesem Sollwert entsprechende Stellung. Der Druck in einer Antriebskammer oder bei doppeltwirkenden Antrieben in beiden Antriebskammern wird so lange verändert, bis die vorgegebene Position des Stellglieds erreicht ist. Dazu wird die aktuelle Position mit einem Weggeber, beispielsweise einem Leitplastik-Potentiometer, erfaßt und ein mit dem Weggeber erzeugtes Istwertsignal zusammen mit dem Sollwert einem Mikrocontroller zugeführt. Dieser vergleicht beide Signale, bildet eine Regelabweichung und berechnet unter Berücksichtigung der Dynamik des pneumatischen Antriebs die erforderlichen Schaltreaktionen nachgeschalteter pneumatischer Ventile. Ein Ventil liegt im Zuluftzweig für eine Erhöhung des Luftdrucks in der Kammer, ein anderes Ventil im Abluftzweig und öffnet, wenn die Kammer entlüftet werden soll.

Beim Verstellen von reibungsbehafteten Stellgliedern muß zunächst eine Stellkraft, insbesondere bei pneumatischen Antrieben ein Differenzdruck in den Membrankammern, entwickelt werden, die größer ist als die Reibungskraft der Ruhe, die Haftreibung. Wenn Stellschritte mit sehr kleiner Schrittweite gewünscht werden, fährt der Antrieb über den neuen Sollwert hinaus, da die Haftreibung größer ist als die Gleitreibung während der Bewegung. Daraus ergibt sich ein minimales Stellinkrement oder eine kleinste Stellschrittweite des Antriebs. In einer Initialisierungsphase werden die minimalen Stellinkremente ermittelt und eine optimale Totzone berechnet, d. h. ein Toleranzbereich um den Sollwert, innerhalb dessen eine Regelabweichung nicht ausgeregelt wird, festgelegt.

Pneumatische Regelventile weisen häufig eine starke Haftreibung auf, die bei Schubantrieben vor allem in der Stopfbuchse, bei Schwenkantrieben in der Zylinder/Kolben-Abdichtung begründet ist. Zur Unterdrückung von Dauerschwingungen bei unverändertem Sollwert ist die Totzone vorgesehen, die bei dem bekannten Stellungsregler größer als das minimale Stellinkrement sein muß. Wird im laufenden Prozeßbetrieb ein Ventil an der Stopfbuchse undicht und die Stopfbuchse stärker angezogen, so hat dies eine erhöhte Haftreibung zur Folge. Bei nun nicht mehr ausreichender Breite der Totzone kann dies eine Dauerschwingung um die Totzone verursachen, die das Regelergebnis nachteilig beeinträchtigt und sowohl den Luftverbrauch als auch den Verschleiß von Antrieb, Ventil und Stellungsregler erhöht. Um dies zu vermeiden, ist der bekannte Stellungsregler mit einer Adaptionseinrichtung ausgestattet, durch welche der Stellungsregler die veränderten Betriebsbedingungen erkennt und durch automatisches Erweitern der Totzone einen stabilen Regelzustand ohne Schwingungen einstellt. Nachteilig dabei ist, daß eine erweiterte Totzone den Regelfehler vergrößert und sich negativ auf die stationäre Regelgenauigkeit auswirkt.

Der Erfindung liegt die Aufgabe zugrunde, einen Stellungsregler für Antriebe zu schaffen, durch den ein genaueres Anfahren von Sollwerten ermöglicht und zudem Dauerschwingungen bei Antrieben wirkungsvoll unterdrückt werden, ohne daß sich hierdurch die Regelgenauigkeit verschlechtert, sowie ein pneumatisches Regelventil mit einem derartigen Stellungsregler zu versehen.

Zur Lösung dieser Aufgabe weist der neue Stellungsregler der eingangs genannten Art die im kennzeichnenden Teil des Anspruchs 1 bzw. das neue pneumatische Regelventil die im kennzeichnenden Teil des Anspruchs 6 angegebenen Merkmale auf. Vorteilhafte Ausgestaltungen sind in den abhängigen Ansprüchen beschrieben.

Die Erfindung hat den Vorteil, daß die Totzone zur Vermeidung von Dauerschwingungen bei konstantem Sollwert nicht zwangsläufig größer sein muß als das minimale Stellinkrement eines Regelantriebs. Durch eine kleinere Totzone wird eine entsprechend bessere Regelgenauigkeit erreicht. Ein weiterer Effekt, der sich vorteilhaft auf eine Steigerung der Regelgenauigkeit auswirkt, ist der, daß ein Antrieb, wenn er einmal in die Gleitreibungsphase übergegangen ist, sehr kleine Änderungen der Schrittweite zuläßt, die erheblich unter dem minimalen Stellinkrement liegen. D. h., die kleinste Schrittweite stellt eine untere Grenze für die einstellbare Schrittweite dar, bei größeren Sollwertsprüngen können kontinuierlich größere Schrittweiten eingestellt werden. Daraus ergibt sich, daß ein Sollwert auch bei kleinen Sollwertsprüngen oder Regelabweichungen sehr genau angefahren werden kann, indem durch einen zwischengeschalteten Stellschritt zunächst eine Position des Antriebs angefahren wird, die zumindest um die kleinste Schrittweite von dem Sollwert entfernt ist. Ungenauigkeiten, die vor allem bei kleinen Sollwertsprüngen auftreten, können somit vermieden werden. Da die Neigung eines Regelantriebs zu Dauerschwingungen nun weniger von der Breite der Totzone abhängt, kann diese vorwiegend in Abhängigkeit anderer Betriebsparameter, insbesondere der gewünschten Regelgenauigkeit, festgelegt werden. In vorteilhafter Weise werden durch die verringerte Zahl von Stellschritten, die durch das genauere Anfahren von Sollwerten und die Vermeidung von Dauerschwingungen erreicht wird, der Verschleiß und die zum Betrieb des Antriebs erforderliche Energie minimiert.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: ein Blockschaltbild eines Regelventils mit Stellungsregler und
- Figur 2: ein Zeitdiagramm mit einem Verlauf eines Regelvorgangs.

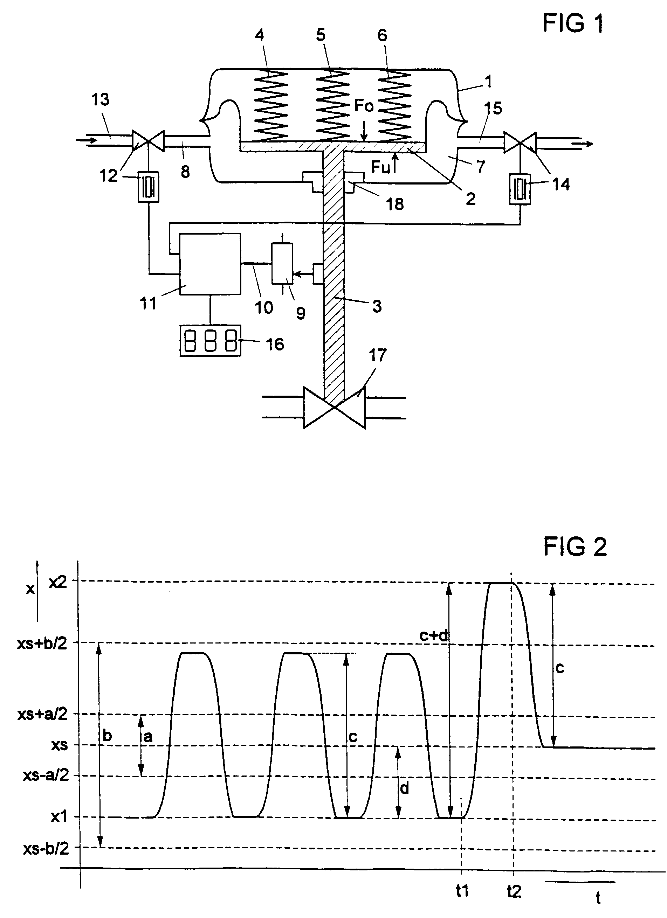

Ein pneumatischer Antrieb weist gemäß Figur 1 ein Antriebsgehäuse 1 auf, in dem ein Antriebselement, hier ein Membranteller 2, beweglich gelagert ist. Das Antriebselement 2 ist mit einer Schubstange 3 verbunden, die zur Betätigung eines Stellglieds 17, hier ein Stellventil, dient. Auf der Oberseite des Membrantellers 2 befinden sich innerhalb des Antriebsgehäuses 1 drei Federn 4, 5 und 6, die auf den Membranteller 2 eine Druckkraft Fo ausüben. Die Unterseite des Membrantellers 2 bildet zusammen mit dem Unterteil des Antriebsgehäuses 1 eine Druckkammer 7, die über eine Zuleitung 8 be- und über eine Ableitung 15 entlüftet werden kann. In Abhängigkeit von dem in der Druckkammer 7 herrschenden Druck wirkt eine Kraft Fu auf die Unterseite des Membrantellers 2. Zur Erfassung der aktuellen Position der Schubstange 3 ist ein Stellungsmelder 9 vorgesehen, der über einen Stellungsabgriff mit der Schubstange 3 gekoppelt ist und ein elektrisch auswertbares Stellungssignal 10 an einen Stellungsregler 11 liefert. Zur Betätigung des pneumatischen Antriebs öffnet oder schließt der Stellungsregler 11 ein Piezoventil 12, das auf der einen Seite mit einer Leitung 13 eines Druckluftversorgungsnetzes und dessen andere Seite mit der Zuleitung 8 verbunden ist. Zur schnellen Entlüftung ist ein Ventil 14 vorgesehen, das die Ableitung 15 zur Umgebung hin öffnet oder schließt. An den Stellungsregler 11 ist eine Anzeige 16 angeschlossen, die beispielsweise zur Ausgabe aktueller Stellungswerte dient. Zusätzlich können Informationen des Stellungsreglers über eine Busschnittstelle, die in Figur 1 nicht dargestellt ist, einem übergeordneten Prozeßleitsystem gemeldet oder umgekehrt von diesem eine Parametrierung oder eine Sollwertvorgabe an den Stellungsregler übermittelt werden. Die Schubstange 3 ist am Antriebsgehäuse 1 durch eine Dichtung 18 und am Ventil 17 durch eine in der Figur nicht dargestellte Stopfbuchse geführt. Diese Führungen, insbesondere wenn die Stopfbuchse aufgrund von Undichtigkeiten des Ventils 17 fest angezogen wurde, verursachen eine starke Haftreibung. Bei Sollwertänderungen muß in der Antriebskammer 7 zunächst ein Druck aufgebaut werden, der ein Kräfteungleichgewicht zwischen den Kräften Fo und Fu verursacht, das in der Lage ist, diese Haftreibung zu überwinden. Selbst wenn unmittelbar nach dem Eintritt in die Gleitreibungsphase jegliche Belüftung der Antriebskammer 7 unterbrochen wird, bewegt sich der Antrieb aufgrund des Kammerdrucks um eine gewisse Wegstrecke, die kleinste Schrittweite, weiter. Diese kleinste erreichbare Schrittweite ist von den geometrischen Antriebsabmessungen, dem verwendeten Luftdruck, der Reglerdynamik, dem Verhältnis zwischen Gleit- und Haftreibung, der jeweiligen Position und weiteren Faktoren abhängig. In einer Initialisierungsphase werden daher durch den Stellungsregler 11, der eine Recheneinheit und einen Datenspeicher enthält, für verschiedene Positionen des Antriebs die kleinste Schrittweite sowie die für verschiedene Schrittweiten erforderlichen pneumatischen Ansteuersignale ermittelt und im Datenspeicher nach Art von Kennlinien hinterlegt. Diese Kennlinien werden während des späteren Betriebs angepaßt, sobald sich durch Alterungseffekte und Verschleiß das Verhalten des Antriebs wesentlich ändert. Überschreitet die kleinste Schrittweite einen vorgegebenen Grenzwert, so wird durch den Stellungsregler 11 eine Fehlermeldung ausgegeben und das Regelventil muß einer Wartung unterzogen werden.

Anhand Figur 2, in der ein beispielhafter Verlauf des Positions-Istwerts x über der Zeit t qualitativ aufgetragen ist, soll im folgenden erläutert werden, wie eine Dauerschwingung eines Antriebs um einen Sollwert xs vermieden wird. Eine Dauerschwingung kann durch den Stellungsregler 11 (Figur 1) ohne weiteres erkannt werden, z. B. indem bei aufeinanderfolgenden Richtungswechseln der Schubstangenbewegung trotz unverändertem Sollwert die jeweilige Schrittweite erfaßt und mit vorhergehenden verglichen wird. Bei gleicher oder zumindest ähnlicher Schrittweite liegt eine Dauerschwingung vor, deren Amplitude der kleinsten einstellbaren Schrittweite c entspricht. Zum Zeitpunkt tl erzeugt der Stellungsregler aus einer ersten Antriebsstellung xl heraus, die dem Schwingungsscheitelpunkt entspricht und um einen Betrag d von dem Sollwert xs entfernt ist, einen ersten Stellschritt, dessen Schrittweite als Summe der Regelabweichung d bei der ersten Antriebsstellung xl und der zuvor ermittelten kleinsten Stellschrittweite c bemessen ist. Durch einen darauffolgenden zweiten Stellschritt, dessen Schrittweite wiederum gleich der kleinsten Schrittweite c ist, wird im Idealfall aus der zweiten Antriebsstellung x2 heraus der Sollwert xs als Antriebsstellung erreicht. In Figur 2 ist mit durchbrochenen Linien die Totzone des Stellungsreglers eingezeichnet, innerhalb der Regelabweichungen nicht ausgeregelt werden. Die Totzonenbreite a genügt bereits, um Dauerschwingungen wirkungsvoll zu unterdrücken und erlaubt in vorteilhafter Weise gleichzeitig eine gute Regelgenauigkeit. Demgegenüber wäre bei dem eingangs beschriebenen bekannten Regler eine erheblich größere Totzone, beispielsweise der Breite b, erforderlich, die zu einer weit schlechteren Regelgenauigkeit führen würde.

In dem Ausführungsbeispiel ist ein pneumatisches Regelventil beschrieben; der Erfindungsgedanke ist ohne weiteres aber auch bei anderen Antriebsarten, beispielsweise hydraulischen oder elektromotorischen, sowie bei anderen Stellgliedern, beispielsweise Klappen, Schiebern oder Doppelsitzventilen, anwendbar.

## Patentansprüche

1. Stellungsregler für Antriebe, der innerhalb einer Totzone, in welcher eine Regelabweichung einen vorgebbaren Wert (a/2) nicht übersteigt, die Regelabweichung nicht ausregelt und außerhalb der Totzone ausregelt,
- mit Mitteln (11) zur Bestimmung einer kleinsten Stellschrittweite des Antriebs,
**gekennzeichnet durch** :
- Mittel (11, 12, 14) zur Erzeugung eines ersten Stellschritts des Antriebs von einer ersten Antriebsstellung (x1) außerhalb der Totzone heraus, dessen Schrittweite (d + c) derart bemessen ist, daß eine zweite Antriebsstellung (x2) nach dem ersten Stellschritt zumindest um die kleinste Schrittweite (c) vom Sollwert (xs) entfernt ist, und zur Erzeugung eines zweiten Stellschritts, dessen Schrittweite (c) derart bemessen ist, daß die Antriebsstellung nach dem zweiten Stellschritt innerhalb der Totzone liegt.

2. Stellungsregler nach Anspruch 1, **dadurch gekennzeichnet,**
- daß Mittel zur Erkennung einer Schwingung des Antriebs um die Totzone bei einem unveränderten Sollwert (xs) und zur Ermittlung der Schwingungsamplitude (c), die der kleinsten Stellschrittweite des Antriebs entspricht, vorgesehen sind und
- daß die erste Antriebsstellung (x1) ein Schwingungsscheitelpunkt ist.

3. Stellungsregler nach Anspruch 1 oder 2, **dadurch gekennzeichnet,**
- daß die Schrittweite (d + c) des ersten Stellschritts als Summe der Regelabweichung (d) bei der ersten Antriebsstellung (x1) und der kleinsten Stellschrittweite (c) bemessen wird.

4. Stellungsregler nach einem der vorhergehenden Ansprüche, **dadurch gekennzeichnet**,
- daß die Mittel (11, 12, 14) zur Erzeugung eines Stellschritts ein pneumatisches Ausgangssignal für einen pneumatischen Antrieb liefern.

5. Stellungsregler nach Anspruch 4, **dadurch gekennzeichnet,**
- daß eine Recheneinheit vorhanden ist zur Ablaufsteuerung in einer Initialisierungsphase, in welcher für Stellschritte verschiedener Schrittweiten erforderliche pneumatische Ausgangssignale ermittelt und in einem Datenspeicher hinterlegt werden, und
- daß zur Erzeugung eines Stellschritts das für die jeweilige Schrittweite erforderliche pneumatische Ausgangssignal anhand der hinterlegten Daten ermittelt wird.

6. Pneumatisches Regelventil mit einem Stellungsregler nach einem der vorhergehenden Ansprüche, **dadurch gekennzeichnet,**
- daß der Stellungsregler innerhalb einer Totzone, in welcher eine Regelabweichung einen vorgebbaren Wert (a/2) nicht übersteigt, die Regelabweichung nicht ausregelt und außerhalb der Totzone ausregelt,
- daß Mittel (11) vorhanden sind zur Erkennung einer Schwingung des Antriebs um die Totzone bei einem unveränderten Sollwert (xs) und zur Ermittlung der Schwingungsamplitude (c), die der kleinsten Stellschrittweite des Antriebs entspricht, und
- daß Mittel (11, 12, 14) vorhanden sind zur Erzeugung eines ersten Stellschritts des Antriebs von einer ersten Antriebsstellung (x1) heraus, dessen Schrittweite (d + c) derart bemessen ist, daß eine zweite Antriebsstellung (x2) nach dem ersten Stellschritt zumindest um die kleinste Schrittweite (c) vom Sollwert (xs) entfernt ist, und zur Erzeugung eines zweiten Stellschritts, dessen Schrittweite (c) derart bemessen ist, daß die Antriebsstellung nach dem zweiten Stellschritt innerhalb der Totzone liegt.

## Claims

1. Positioner for drives which does not compensate a system deviation inside a dead zone in which the system deviation does not exceed a predeterminable value (a/2) and does compensate the system deviation outside the dead zone,
- having means (11) for determining a smallest positioning-step size of the drive,
characterised by:
- means (11, 12, 14) for generating a first positioning step of the drive from a first drive position (x1) outside the dead zone, the step size (d + c) of which positioning step is dimensioned in such a way that a second drive position (x2) after the first positioning step is distanced from the setpoint (xs) by at least the smallest step size (c), and for generating a second positioning step, the step size (c) of which is dimensioned in such a way that the drive position after the second positioning step lies inside the dead zone.

2. Positioner according to claim 1, characterised
- in that means for recognising an oscillation of the drive about the dead zone in the case of an unchanged setpoint (xs) and for establishing the oscillation amplitude (c), which corresponds to the smallest positioning-step size of the drive, are provided, and
- in that the first drive position (x1) is an oscillation summit.

3. Positioner according to claim 1 or 2, characterised
- in that the step size (d + c) of the first positioning step is dimensioned as the sum of the system deviation (d) at the first drive position (x1) and the smallest positioning-step size (c).

4. Positioner according to one of the preceding claims, characterised
- in that the means (11, 12, 14) for generating a positioning step deliver a pneumatic output signal for a pneumatic drive.

5. Positioner according to claim 4, characterised
- in that there is an arithmetic unit for sequencing control in an initialisation phase, in which pneumatic output signals required for positioning steps of different step sizes are established and stored in a data memory, and
- in that in order to generate a positioning step, the pneumatic output signal required for the respective step size is established with the aid of the stored data.

6. Pneumatic control valve having a positioner according to one of the preceding claims, characterised
- in that the positioner does not compensate a system deviation inside a dead zone in which the system deviation does not exceed a predeterminable value (a/2) and does compensate the system deviation outside the dead zone,
- in that there are means (11) for recognising an oscillation of the drive about the dead zone in the case of an unchanged setpoint (xs) and for establishing the oscillation amplitude (c), which corresponds to the smallest positioning-step size of the drive, and
- in that there are means (11, 12, 14) for generating a first positioning step of the drive from a first drive position (x1), the step size (d + c) of which positioning step is dimensioned in such a way that a second drive position (x2) after the first positioning step is distanced from the setpoint (xs) by at least the smallest step size (c), and for generating a second positioning step, the step size (c) of which is dimensioned in such a way that the drive position after the second positioning step lies inside the dead zone.

## Revendications

1. Régulateur de position pour des dispositifs d'entraînement qui, à l'intérieur d'une zone neutre dans laquelle un écart de régulation n'est pas supérieur à une valeur (a/2) pouvant être prescrite, ne régule pas l'écart de régulation et qu'il régule à l'extérieur de la zone neutre,
- comportant des moyens (11) pour déterminer une plus petite largeur de pas de réglage du dispositif d'entraînement,
caractérisé par
- des moyens (11, 12, 14) pour produire un premier pas de réglage du dispositif d'entraînement à partir d'une première position (x1) d'entraînement à l'extérieur de la zone neutre dont la largeur (d+c) de pas est prévue de telle manière qu'une deuxième position (x2) d'entraînement est, après le premier pas de réglage, éloignée de la valeur (xs) de consigne au moins de la largeur (c) de pas la plus petite, et pour produire un deuxième pas de réglage dont la largeur (c) de pas est prévue de telle manière que la position d'entraînement se trouve après le deuxième pas de réglage à l'intérieur de la zone neutre.

2. Régulateur de position suivant la revendication 1, caractérisé
- en ce qu'il est prévu des moyens pour reconnaître une oscillation du dispositif d'entraînement par rapport à la zone neutre pour une valeur (xs) de consigne qui reste inchangée et pour déterminer l'amplitude (c) de l'oscillation qui correspond à la largeur de pas de réglage la plus petite du dispositif d'entraînement, et
- en ce que la première position (x1) d'entraînement est un sommet de l'oscillation.

3. Régulateur de position suivant la revendication 1 ou 2, caractérisé
- en ce que la largeur (d+c) de pas du premier pas de réglage est prévue comme somme de l'écart (d) de régulation pour la première position (x1) d'entraînement et de la plus petite largeur (c) de pas de réglage.

4. Régulateur de position suivant l'une des revendications précédentes, caractérisé
- en ce que les moyens (11, 12, 14) pour produire un pas de réglage fournissent un signal de sortie pneumatique pour un dispositif d'entraînement pneumatique.

5. Régulateur de position suivant la revendication 4, caractérisé
- en ce qu'il est présent une unité de calcul pour la commande de déroulement lors d'une phase d'initialisation pendant laquelle des signaux de sortie pneumatiques nécessaires pour des pas de réglage de diverses largeurs de pas sont déterminés et mis en mémoire dans une mémoire de données, et
- en ce qu'il est déterminé à l'aide des données en mémoire, en vue de produire un pas de réglage, le signal de sortie pneumatique nécessaire pour la largeur de pas associée.

6. Vanne de régulation pneumatique comportant un régulateur de position suivant l'une des revendications précédentes, caractérisé
- en ce que le régulateur de position ne régule pas un écart de réglage à l'intérieur d'une zone neutre dans laquelle l'écart de régulation n'est pas supérieur à une valeur (a/2) pouvant être prescrite et le régule à l'extérieur de la zone neutre,
- en ce qu'il est présent des moyens (11) pour reconnaître une oscillation du dispositif d'entraînement par rapport à la zone neutre en cas de valeur (xs) de consigne inchangée et pour déterminer l'amplitude (c) de l'oscillation qui correspond à la plus petite largeur de pas de réglage du dispositif d'entraînement, et
- en ce qu'il est présent des moyens (11, 12, 14) pour produire un premier pas de réglage du dispositif d'entraînement à partir d'une première position (x1) d'entraînement dont la largeur (d+c) de pas est prévue de telle manière qu'une deuxième position (x2) d'entraînement est, après le premier pas de réglage, éloignée de la valeur (xs) de consigne au moins de la plus petite largeur (c) de pas, et pour produire un deuxième pas de réglage dont la largeur (c) de pas est prévue de telle manière que la position d'entraînement après le deuxième pas de réglage se trouve à l'intérieur de la zone neutre.
